# FASCICULE DE BREVET EUROPEEN

(11) **EP 1 009 604 B1**
(45) Date de publication et mention de la délivrance du brevet: **24.07.2002**
(21) Numéro de dépôt: 98925549.2
(22) Date de dépôt: 07.05.1998
(51) Int. Cl.: B29C 33/10, B29C 44/12

(54) **PROCEDE POUR INTRODUIRE UN COMPOSANT ELECTRIQUE DU TYPE A FEUILLES DANS UN CORPS MOULE**
VERFAHREN ZUM EINBRINGEN EINER FOLIENARTIGEN ELEKTRISCHEN KOMPONENTE IN EINEN FORMKÖRPER
METHOD FOR INSERTING A FILM-TYPE ELECTRIC COMPONENT IN A MOULDED ELEMENT

(30) Priorité: 14.05.1997 LU 90063
(43) Date de publication de la demande: 21.06.2000
(73) Titulaire: I.E.E. International Electronics & Engineering S.à.r.l., L-2632 Luxembourg (LU)
(72) Inventeur: RUGGIU, Manuel, L-4687 Differdange (LU); BEN HSAIN, Abdellatif, L-6136 Junglinster (LU)
(74) Mandataire: Beissel, Jean
(86) Numéro de dépôt international: EP9802677
(87) Numéro de publication internationale: WO9851461

(56) Documents cités:
- EP-A- 0 130 552
- US-A- 4 314 227
- US-A- 5 121 289

## Description

La présente invention concerne un procédé pour introduire un composant électrique du type à feuille dans un corps moulé.

Les composants électriques du type à feuilles, comme p.ex. les commutateurs à membrane, les capteurs de pression en feuille, etc., comprennent généralement au moins deux feuilles élastiques qui sont disposées à une certaine distance l'une par rapport à l'autre. Ceci est p.ex. réalisé au moyen d'écarteurs qui sont collés entre les deux feuilles de manière à entourer la zone active du composant électrique. Dans sa zone active, le composant comprend au moins deux structures de contact qui sont disposées sur les feuilles de telle sorte que, lors de la compression des deux feuilles, un contact électrique est réalisé entre les structures de contact. Après l'enlèvement de la pression sur les feuilles, celles-ci reviennent dans leur position écartée sous l'effet de leur élasticité et le contact électrique entre les structures de contact est à nouveau interrompu.

Afin de garantir une réponse fiable du composant pour différentes pressions ambiantes, les composants électriques de ce type comprennent généralement un canal de ventilation qui relie l'espace entre les deux feuilles avec l'environnement et qui permet ainsi une égalisation des pressions entre ledit espace et l'environnement. Un exemple d'un tel composant électrique, à savoir un capteur de force dont la résistance électrique varie en fonction de la force appliquée, est décrit dans le document US-A-4,314,227.

Lors de l'introduction d'un tel composant électrique dans un corps moulé, p.ex. dans un procédé de surmoulage par moussage, il s'agit de bien faire attention, que les canaux de ventilation ne soient pas obturées par la mousse injectée dans le moule. Afin d'éviter une telle obturation, les canaux de ventilation débouchent généralement dans des évidements dans le corps moulé, qui permettent plus tard une ventilation facile de l'espace entre les différentes feuilles du composant. Lorsqu'il s'agit pour le corps moulé d'un rembourrage pour un siège automobile, les évidements dans le corps moulé ont souvent encore la fonction de recevoir les rappels de garnissage du siège, c'est-à-dire les éléments de fixation de la coiffe du siège. Or il est clair que le nombre, l'emplacement et la forme de tels évidements dans le rembourrage du siège sont fortement soumis à des contraintes dues au design et la fonctionnalité du siège. Il en résulte des restrictions importantes quant à l'emplacement des canaux de ventilation et à la position des composants électriques dans le siège, restrictions qui sont directement liées à la profondeur et au nombre des évidements.

L'objet de la présenté invention est de proposer une méthode pour introduire un composant électrique du type à feuilles dans un corps moulé, qui permet une liberté complète quant à l'emplacement du composant dans le corps moulé.

Conformément à l'invention, cet objectif est atteint par un procédé pour introduire un composant électrique du type à feuilles dans un corps moulé, le composant électrique comprenant au moins un canal de ventilation, et qui comprend une étape consistant à faire déboucher le canal de ventilation dans la périphérie ou dans la partie inférieure du corps moulé de sorte à relier l'espace entre deux feuilles du composant électrique avec l'environnement. Dans une exécution préférée, l'introduction du composant électrique se fait par un procédé de surmoulage par moussage, dans lequel une mousse est injectée dans un moule, et le composant électrique est placé à l'intérieur du moule de sorte que le canal de ventilation du composant électrique débouche dans une paroi latérale ou dans une paroi inférieure du moule. Dans une autre exécution de ce procédé, le canal de ventilation du composant électrique débouche à l'extérieur du moule.

A l'aide de ce procédé, l'introduction du composant électrique se fait indépendamment de la présence et de la position d'évidements dans le corps moulé et n'est donc plus limitée par des contraintes dues p.ex. au design d'un siège automobile. Il devient donc possible d'introduire de tels composants électriques dans des corps moulés qui ne présentent plus aucun évidement, à savoir p.ex. des sièges automobiles pour lesquels les coiffes ne sont pas fixées par des rappels de garnissage mais sont simplement collées sur le rembourrage. Il en résulte qu'on peut dès lors équiper toutes les voitures de composants pour détecter p.ex. l'occupation des sièges du conducteur et des passagers afin de pouvoir commander p.ex. un airbag, un chauffage etc. en conséquence.

De plus, la position du composant électrique dans le corps moulé est indépendante du nombre, de la position et de la forme des évidements dans le corps moulé, elle peut donc être choisie selon des critères de fonctionnalité qui sont indépendantes des autres facteurs. C'est ainsi que dans un procédé de surmoulage du composant électrique par moussage, le composant électrique peut être positionné dans le moule, avant l'injection de la mousse, au moyen de plots de maintien à une profondeur qui est complètement indépendante d'éventuels rappels de garnissage dans le moule, ce qui fait que la hauteur des plots de maintien ne doit pas être adaptée à la position de ces rappels de garnissage. Il est alors avantageux de prévoir des plots de maintien qui sont amovibles afin de pouvoir facilement varier la profondeur de l'emplacement du composant électrique. Dans le cas d'un détecteur d'occupation d'un siège automobile, la position du capteur dans le rembourrage du siège peut ainsi être optimisée afin d'obtenir une caractéristique de réponse favorable tout en conservant le confort du siège.

Le fait que le canal de ventilation débouche à l'extérieur du corps moulé présente un autre avantage très important pour une fabrication en série. En effet, après l'introduction du composant électrique dans le corps moulé, l'ouverture de ventilation du canal de ventilation est visible de l'extérieur du corps moulé. On peut donc facilement contrôler le bon fonctionnement du canal de ventilation de l'extérieur, c'est-à-dire reconnaître et enlever une obturation éventuelle du canal de ventilation.

Lorsque l'introduction du composant électrique dans le corps moulé se fait par un procédé de surmoulage par moussage, le canal de ventilation du composant électrique est souvent prolongé par un embout qui est obturé à son extrémité libre afin d'éviter la pénétration de mousse dans le canal de ventilation durant l'injection de la mousse dans le moule. Après l'introduction du composant électrique dans le corps moulé, l'embout du canal de ventilation est coupé et le canal de ventilation est ainsi ouvert afin de permettre une ventilation de l'espace entre les deux feuilles. Dans les procédés d'introduction traditionnels, les embouts des canaux de ventilation s'étendaient dans différents évidements dans le corps en mousse, ce qui rendait leur découpe très difficile. Avec le procédé proposé, les embouts des canaux de ventilation s'étendent à l'extérieur du corps moulé et peuvent donc facilement être découpés. Les embouts étant visibles de l'extérieur après l'introduction du composant électrique dans le corps moulé, la probabilité que leur découpage soit oublié est de plus nettement réduite par rapport aux procédés traditionnels.

La présente invention concerne également un composant électrique du type à feuilles destiné à être introduit dans un corps moulé, comprenant au moins un canal de ventilation. Le canal de ventilation est exécuté de telle sorte qu'il débouche dans la périphérie ou dans la partie inférieure du corps moulé lors de l'introduction du composant électrique dans le corps moulé de sorte à relier un espace entre deux feuilles du composant électrique avec l'environnement. Dans une exécution préférée, le canal de ventilation est exécuté de telle sorte que, lors d'un surmoulage du composant électrique dans un moule, il débouche dans une paroi latérale ou dans une paroi inférieure du moule ou à l'extérieur du moule.

Le composant électrique comprend de préférence plusieurs zones actives distancées entre elles, chaque zone active étant reliée par un canal de ventilation avec l'extérieur du corps moulé. Un canal de ventilation relie avantageusement plusieurs zones actives avec l'extérieur.

Dans une exécution préférée, les zones actives sont disposées sur plusieurs bandes substantiellement parallèles entre elles, et des zones actives qui sont substantiellement alignées dans la direction perpendiculaire aux bandes sont reliées entre elles au moyen d'un canal de ventilation qui s'étend substantiellement de manière perpendiculaire aux bandes.

D'autres particularités et caractéristiques de l'invention ressortiront de la description détaillée d'un mode de réalisation avantageux présenté ci-dessous, à titre d'illustration, en référence aux dessins annexés. Celles ci montrent:
- Fig.1:: un capteur d'occupation pour un siège d'automobile traditionnel pour surmouler dans le rembourrage d'un siège selon un procédé traditionnel et une coupe à travers le moule pour le surmoulage par moussage,
- Fig.2:: une exécution d'un capteur d'occupation pour un siège d'automobile selon la présente invention pour surmouler dans le rembourrage d'un siège selon le procédé de l'invention et une coupe à travers le moule pour le surmoulage par moussage.

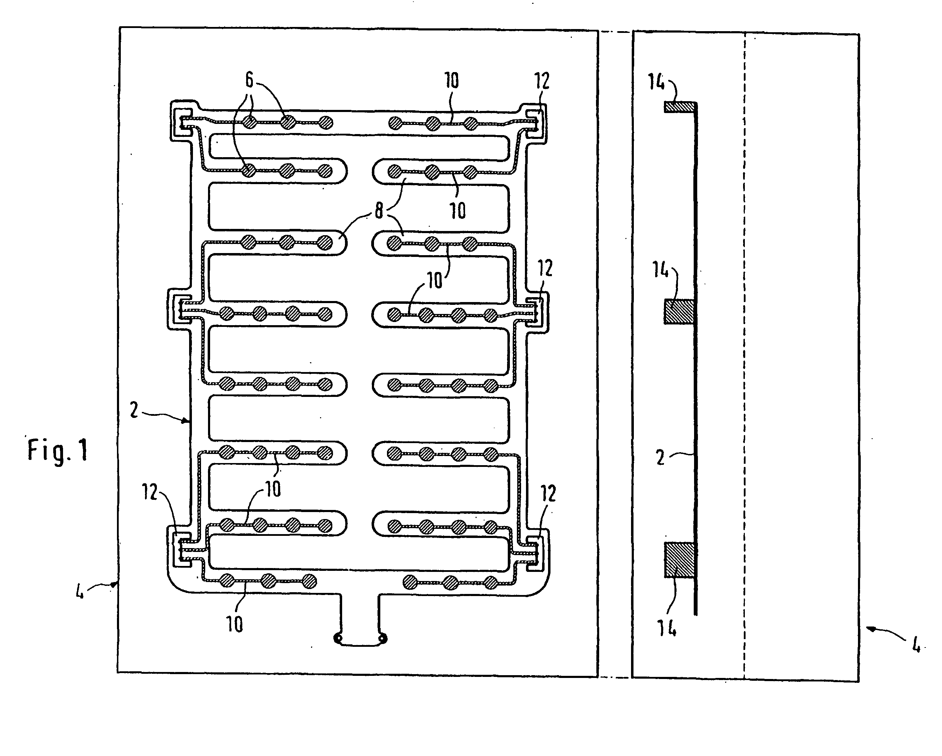

La figure 1 représente schématiquement un capteur d'occupation 2 traditionnel pour introduire dans le rembourrage d'un siège d'automobile ainsi qu'une coupe à travers le moulé 4 destiné à surmouler le capteur 2 dans ledit rembourrage. Pour le capteur, il s'agit par exemple d'un capteur de force du type tel que décrit dans le document US-A-4,314,227, dont la résistance électrique varié en fonction de la force appliquée. Le capteur 2 présente plusieurs zones actives 6, qui sont disposées sur plusieurs bandes 8 de feuilles substantiellement parallèles. Les zones actives 6 d'une bande 8 sont à chaque fois reliées entre elles au moyen d'un canal de ventilation 10 qui débouche sur un côté dans une découpure 12 dans le capteur. Les découpures 12 sont disposées de telle manière dans le bord du capteur, qu'après introduction du capteur dans le rembourrage du siège, elles se recouvrent avec des évidements dans le rembourrage qui servent à recevoir les rappels de garnissage 14, c'est-à-dire les éléments pour fixer la coiffe du siège. Le nombre et la position des découpures 12 sont donc liés au nombre et à la position des rappels de garnissage 14 et par là soumis à des contraintes de design et de fonctionnalité du siège. Il est en effet clair, que les dimensions des évidements doivent être assez petites et leur nombre et position dans le siège doivent être choisies de telle sorte que le confort du siège ne soit pas diminué.

Ces contraintes sont à l'origine de plusieurs problèmes pour la fabrication du capteur et pour son introduction dans le corps moulé. En effet vu le petit nombre d'évidements permis dans le rembourrage, il faut faire déboucher plusieurs canaux de ventilation 10 dans une même découpure 12, ce qui complique fortement la fabrication du capteur vu la petite dimension des découpures. Ensuite il faut placer le capteur dans le moule, de telle sorte que la position des découpures 12 se recouvre exactement avec la position des rappels de garnissage. De plus, la profondeur du capteur dans le siège est liée à la profondeur des rappels de garnissage et ne peut donc pas être adaptée facilement aux exigences d'une réponse fiable du capteur dans le siège.

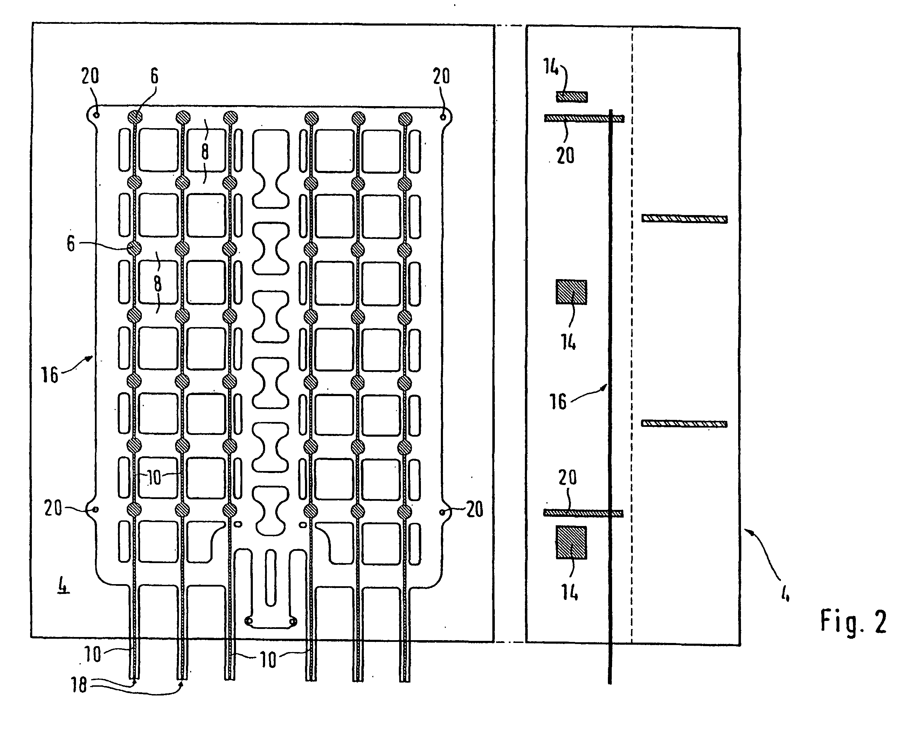

La figure 2 représente schématiquement une exécution d'un capteur d'occupation 16 selon la présente invention pour introduire dans le rembourrage d'un siège d'automobile ainsi qu'une coupe à travers le moule 4 destiné à surmouler le capteur 16 dans ledit rembourrage. Il comprend, comme le capteur 2 de la fig. 1, plusieurs zones actives 6, qui sont disposées sur plusieurs bandes 8 de feuilles substantiellement parallèles. Plusieurs zones actives 6 sont à chaque fois reliées entre elles par un canal de ventilation 10 qui est prolongé de telle sorte qu'après introduction du capteur dans le moule 4, une ouverture de ventilation 18 du canal de ventilation 10 est disposée à l'extérieur du moule 4. Dans le cas représenté sur la figure 2, à chaque fois les zones actives 6 qui sont alignées dans un sens perpendiculaire aux bandes 8 de feuilles sont reliées par un canal de ventilation 10 qui s'étend de manière substantiellement perpendiculaire aux bandes 8. Le quadrillage ainsi créé par les bandes et les canaux de ventilation procure au capteur 16 une structure fermée sans-éléments en porte à faux, ce qui lui procure avantageusement une stabilité élevée contre la torsion des bandes 8 lors de l'injection de la mousse dans le moule 4. D'autre part, cette structure facilite l'enlèvement de la pellicule protectrice de l'écarteur lors de la production du capteur, permettant ainsi une automatisation de la fabrication du capteur.

Il est à noter que dans un autre mode de réalisation les canaux de ventilation pourraient également relier les zones actives 6 disposées dans une bande et par conséquence s'étendre dans la même direction que les bandes. Dans un autre mode de réalisation, le zones actives reliées par un même canal de ventilation peuvent être décalées alternativement, de sorte que le canal de ventilation aura une forme en dents de scie.

Les canaux de ventilation 10 débouchant à l'extérieur du moule 4 et non dans des évidements dans le rembourrage, la position du capteur 16 dans le corps moulé est indépendante du nombre, de la position et de la forme de tels évidements et peut par conséquent être choisie selon des critères de fonctionnalité qui sont indépendantes des autres facteurs. C'est ainsi que le capteur 16 est de manière avantageuse positionné dans le moule 4, avant l'injection de la mousse, au moyen de plots de maintien 20 à une profondeur qui est complètement indépendante de rappels de garnissage 14 dans le moule. Il est alors avantageux de prévoir des plots de maintien 20 qui sont échangeables afin de pouvoir facilement varier la profondeur de l'emplacement du capteur et optimiser ainsi sa position pour obtenir une caractéristique de réponse favorable tout en conservant le confort du siège. Dans la réalisation de la fig. 2, les plots de maintien sont disposés de manière symétrique à l'axe longitudinal du moule. Dans une autre exécution, les plots de maintien 20 sont disposés de manière irrégulière par rapport à l'axe du moule 4, de sorte qu'une inversion des faces supérieure et inférieure du capteur devienne impossible.

Le fait que les canaux de ventilation 10 débouchent à l'extérieur du corps moulé et préférentiellement sur un même côté de celui-ci, présente un avantage très important pour une fabrication en série. En effet, ceci facilite notamment le découpage d'embouts éventuels qui servent à obturer les canaux de ventilation 10 durant l'introduction dans le corps moulé et empêchent ainsi la pénétration de la mousse dans les canaux. Désormais ce découpage peut se faire automatiquement et par une seule coupe. De plus, les ouvertures de ventilation 18 des canaux de ventilation 10 sont visible de l'extérieur du corps moulé. On peut donc facilement contrôler le bon fonctionnement du canal de ventilation 10 de l'extérieur, c'est-à-dire reconnaître et enlever une obturation éventuelle du canal de ventilation 10.

Bien entendu, les composants électriques peuvent également être introduits dans un siège de voitures par d'autres procédés bien connus par les hommes de métiers. On peut par exemple introduire les composants électriques entre deux parties préfabriqués d'un siège.

## Revendications

1. Procédé pour introduire un composant électrique du type à feuilles (2) dans un corps moulé, le composant électrique (2) comprenant au moins un canal de ventilation (10), **caractérisé par** une étape qui consiste à faire déboucher le canal de ventilation (10) dans la périphérie ou dans la partie inférieure du corps moulé de sorte à relier l'espace entre deux feuilles du composant électrique (2) avec l'environnement.

2. Procédé selon la revendication 1, l'introduction du composant électrique (2) se faisant par un procédé de surmoulage par moussage, dans lequel une mousse est injectée dans un moule (4), **caractérisé en ce que** le composant électrique (2) est placé à l'intérieur du moule (4) de sorte que le canal de ventilation (10) du composant électrique (2) débouche dans une paroi latérale ou dans une paroi inférieure du moule.

3. Procédé selon la revendication 2, **caractérisé en ce que** le composant électrique (2) est placé à l'intérieur du moule de sorte que le canal de ventilation (10) du composant électrique (2) débouche à l'extérieur du moule (4).

4. Procédé selon la revendication 2 ou 3, **caractérisé en ce qu'**avant l'injection de la mousse dans le moule (4), le composant électrique (2) est positionné dans le moule (4) au moyen de plots de maintien (20).

5. Procédé selon la revendication 4, **caractérisé en ce que** les plots de maintien (20) sont amovibles.

6. Composant électrique dû type à feuilles destiné à être introduit dans un corps moulé, comprenant au moins un canal de ventilation (10), **caractérisé en ce que** le canal de ventilation (10) est exécuté de telle sorte qu'il débouche dans la périphérie ou dans la partie inférieure du corps moulé lors de l'introduction du composant électrique (2) dans le corps moulé de sorte à relier un espace entre deux feuilles du composant électrique (2) avec l'environnement.

7. Composant électrique selon la revendication 6, **caractérisé en ce que** le canal de ventilation (10) est exécuté de telle sorte que, lors d'un surmoulage du composant électrique dans un moule (4), le canal de ventilation (10) débouche dans une paroi latérale ou dans une paroi inférieure du moule (4).

8. Composant électrique selon la revendication 7, **caractérisé en ce que** le canal de ventilation (10) est exécuté de telle sorte que, lors d'un surmoulage du composant électrique (2) dans un moule, le canal de ventilation (10) débouche à l'extérieur du moule (4).

9. Composant électrique selon l'une des revendications 6 à 8, **caractérisé par** plusieurs zones actives (6) distancées entre elles, chaque zone active (6) étant reliée par un canal de ventilation (10) avec l'extérieur du corps moulé.

10. Composant électrique selon la revendication 9, **caractérisé en ce que** un canal de ventilation (10) relie plusieurs zones actives (6) avec l'extérieur.

11. Composant électrique selon l'une des revendications 9 à 10, **caractérisé en ce que** les zones actives (6) sont disposées sur plusieurs bandes (8) substantiellement parallèles entre elles, et **en ce que** des zones actives (6) qui sont substantiellement alignées dans la direction perpendiculaire aux bandes (8) sont reliées entre elles au moyen d'un canal de ventilation (10) qui s'étend substantiellement de manière perpendiculaire aux bandes.

12. Composant électrique selon l'une des revendications 6 à 11, **caractérisé en ce qu'**il s'agit d'un un capteur de force dont la résistance électrique varie en fonction de la force appliquée.

13. Corps moulé comprenant un composant électrique du type à feuilles **caractérisé en ce que** le composant électrique comprend un canal de ventilation (10) débouchant sur la périphérie ou dans la partie inférieure du corps moulé.

14. Siège de voiture comprenant un corps moulé selon la revendication précédente.

## Patentansprüche

1. Verfahren zum Einbringen einer folienartigen elektrischen Komponente in einen Formkörper, wobei die elektrische Komponente (2) mindestens einen Ventilationskanal (10) umfasst, **gekennzeichnet durch** den Schritt der darin besteht, den Ventilationsskandal (10) derart in die Umfangsfläche oder in den unteren Bereich des Körpers münden zu lassen, dass der Raum zwischen zwei Folien der elektrischen Komponente (2) mit der Umgebung verbunden ist.

2. Verfahren nach Anspruch 1, wobei die Einbringung der elektrischen Komponente (2) durch einen Einschäumprozess erfolgt, bei dem ein Schaum in eine Form (4) eingespritzt wird, **dadurch gekennzeichnet, dass** die elektrische Komponente (2) derart im Inneren der Form (4) angeordnet wird, dass der Ventilationskanal (10) der elektrischen Komponente (2) an eine Seitenwand oder an eine untere Wand der Form mündet.

3. Verfahren nach Anspruch 2, **dadurch gekennzeichnet, dass** die elektrische Komponente (2) derart im Inneren der Form angeordnet wird, dass der Ventilationskanal (10) in den Außenbereich der Form (4) mündet.

4. Verfahren nach einem der Ansprüche 2 oder 3, **dadurch gekennzeichnet, dass** die elektrische Komponente (2) vor dem Einspritzen des Schaums in die Form (4) mittels Halteklötzen (20) in der Form (4) positioniert wird.

5. Verfahren nach Anspruch 4, **dadurch gekennzeichnet, dass** die Halteklötze (20) entnehmbar sind.

6. Folienartige elektrische Komponente, die zum Einbringen in einen Formkörper bestimmt ist, umfassend mindestens einen Ventilationskanal (10), **dadurch gekennzeichnet, dass** der Ventilationskanal (10) derart ausgebildet ist, dass er beim Einbringen der elektrischen Komponente (2) in den Formkörper in die Umfangsfläche oder in den unteren Bereich des Formkörpers mündet, so dass ein Raum zwischen zwei Folien der elektrischen Komponente (2) mit der Umgebung verbunden ist.

7. Elektrische Komponente nach Anspruch 6, **dadurch gekennzeichnet dass** der Ventilationskanal (10) derart ausgebildet ist, dass der Ventilationskanal (10) beim Umschäumen der elektrischen Komponente in einer Form (4) an eine Seitenwand oder an eine seitliche Wand der Form (4) mündet.

8. Elektrische Komponente nach Anspruch 7, **dadurch gekennzeichnet, dass** der Ventilationskanal (10) derart ausgebildet ist, dass der Ventilationskanal (10) beim Umschäumen der elektrischen Komponente in einer Form (4) in den Außenbereich der Form (4) mündet.

9. Elektrische Komponente nach einem der Ansprüche 6 bis 8, **gekennzeichnet durch** mehrere untereinander beanstandete aktive Bereiche (6), wobei jeder aktive Bereich (6) **durch** einen Ventilationskanal (10) mit dem Außenbereich des Formkörpers verbunden ist.

10. Elektrische Komponente nach Anspruch 9, **dadurch gekennzeichnet, dass** ein Ventilationskanal (10) mehrere aktive Bereiche (6) mit dem Außenbereich verbindet.

11. Elektrische Komponente nach einem der Ansprüche 9 bis 10, **dadurch gekennzeichnet, dass** die aktiven Bereiche (6) auf mehreren Streifen (8) angeordnet sind, die untereinander im wesentlichen parallel verlaufen, und dass die aktiven Bereiche (6), die im wesentlichen in einer Richtung quer zu den Streifen (8) ausgerichtet sind, untereinander mittels eines Ventilationskanals (10) verbunden sind, der sich im wesentlichen quer zu den Streifen erstreckt.

12. Elektrische Komponente nach einem der Ansprüche sechs bis 11, **dadurch gekennzeichnet, dass** es sich um einen Drucksensor handelt, dessen elektrischer Widerstand sich in Abhängigkeit der angelegten Kraft verändert.

13. Formkörpers mit einer folienartigen elektrischen Komponente, **dadurch gekennzeichnet, dass** die elektrische Komponente einen Ventilationskanal (10) umfasst, der in die Umgebungsfläche oder in den unteren Bereich des Formkörpers mündet.

14. Fahrzeugsitz umfassend einen Formkörper nach dem vorhergehenden Anspruch.

## Claims

1. A method of introducing a sheet-type electric component (2) into a moulded body, said electric component (2) comprising at least one ventilation duct (10), **characterized by** a step which consists in clearing said ventilation duct (10) in the periphery or in the lower part of the moulded body such that the space between two sheets of the electric component (2) is connected to the environment.

2. The method according to claim 1, where the introduction of the electric component (2) is carried out by a moulding process by foaming in which a foam is injected into a mould (4), **characterized in that** the electric component (2) is placed inside the mould (4) such that the ventilation duct (10) of the electric component (2) opens into a side wall or into a lower wall of the mould.

3. The method according to claim 2, **characterized in that** the electric component (2) is placed inside the mould such that the ventilation duct (10) of the electric component (2) opens to the outside of the mould (4).

4. The method according to claims 2 or 3, **characterized in that** prior to injecting foam into the mould (4), the electric component (2) is positioned in the mould (4) using holding blocks (20).

5. The method according to claim 4, **characterized in that** the holding blocks (20) are removable.

6. A sheet-type electric component to be introduced into a moulded body, comprising at least one ventilation duct (10), **characterized in that** the ventilation duct (10) is implemented such that it opens into the periphery or into the lower part of the moulded body while the electric component (2) is being introduced into the moulded body such that a space between two sheets of the electric component (2) is connected to the environment.

7. An electric component according to claim 6, **characterized in that** the ventilation duct (10) is implemented such that during duplicate moulding of the electric component in a mould (4), the ventilation duct (10) opens into a side wall or into a lower wall of the mould (4).

8. An electric component according to claim 7, **characterized in that** the ventilation duct (10) is implemented such that during duplicate moulding of the electric component (2) in a mould, the ventilation duct (10) of the electric component (2) opens to the outside of the mould (4).

9. An electric component according to any one of claims 6 to 8, **characterized by** several active regions (6) spaced from each other, each active region (6) being connected to the outside of the moulded body through a ventilation duct (10).

10. An electric component according to claim 9, **characterized in that** a ventilation duct (10) connects several active regions (6) to the outside.

11. An electric component according to any one of claims 9 to 10, **characterized in that** the active regions (6) are located on several strips (8) substantially parallel to each other, and **in that** active regions (6) which are substantially aligned in the direction perpendicular to the strips (8) are connected to each other through a ventilation duct (10) which extends substantially perpendicular to the strips.

12. An electric component according to any one of claims 6 to 11, **characterized in that** it is a force sensor having an electric resistance which varies as a function of the applied force.

13. A moulded body comprising a sheet-type electric component, **characterized in that** the electric component comprises a ventilation duct (10) which opens into the periphery or the lower part of the moulded body.

14. A vehicle seat comprising a moulded body according to the previous claim.
